# EUROPÄISCHE PATENTANMELDUNG

(11) **EP 2 317 620 A2**
(43) Veröffentlichungstag der Anmeldung: **04.05.2011**
(21) Anmeldenummer: 10186395.9
(22) Anmeldetag: 04.10.2010
(51) Int. Cl.: H02G 3/08, H02G 3/22

(54) **Flansch zum Durchführen von Leitungen bei einem Elektroinstallations-Verteiler sowie Elektroinstallations-Verteiler**

(30) Priorität: 28.10.2009 DE 102009051133
(71) Anmelder: SIEMENS AKTIENGESELLSCHAFT, 80333 München (DE)
(72) Erfinder: Kandlbinder, Max, 93142, Maxhütte-Haidhof (DE)

(57) **Zusammenfassung**

Der erfindungsgemäße Flansch (1) ist zum Durchführen von Leitungen bei einem Elektroinstallations-Verteiler (10) verwendbar und weist einen Rahmen (2) auf, welcher zum Befestigen des Flansches (1) an einer in einem Gehäuseteil (11) ausgebildeten Öffnung (12) des Elektroinstallations-Verteilers (10) ausgebildet ist. Weiterhin weist der Flansch (1) einen Durchführungsbereich zum Durchführen von Leitungen (13) auf, wobei der Durchführungsbereich mit einer Abdeckung (3) verschließbar ist und wobei der Rahmen (2) Durchführungsbereich zumindest teilweise umschließt. Der Rahmen (2) weist dabei einen metallischen Werkstoff auf und ist derart ausgebildet, dass er einwirkende mechanische Kräfte kompensiert, wobei er seine Form im Wesentlichen beibehält. Die Abdeckung (3) ist besteht dabei aus einem isolierenden Material und ist durch ein Spritzgussverfahren fest mit dem Rahmen (2) verbunden. Dadurch wird sowohl eine hohe mechanische Stabilität als auch eine gute, elektrisch isolierende Schutzwirkung des Flansches (1) gewährleistet.

## Beschreibung

Die Erfindung betrifft einen Flansch, der zum Durchführen von Leitungen bei einem Elektroinstallations-Verteiler verwendbar ist, sowie einen Elektroinstallations-Verteiler, welcher einen derartigen Flansch aufweist.

In der Elektroinstallationstechnik ist unter einem Elektroinstallations-Verteiler (oder kurz: Verteiler) ein verschließbarer Kasten zu verstehen, in dem Sicherungs- und Schaltelemente zur Verteilung des elektrischen Stroms in Gebäuden untergebracht sind. Von dem Verteiler führen elektrische Leitungen entweder direkt zu den Verbrauchsstellen oder zu einem weiteren, nachgeordneten Verteiler. Umgangssprachlich werden derartige Elektroinstallations-Verteiler auch Verteilerkasten oder Sicherungskasten genannt. Zum Durchführen oder Einführen von Leitungen in den Verteiler kann ein sogenannter Leitungseinführungsflansch - kurz: Flansch - verwendet werden. Dabei handelt es sich um ein Bauteil, welches in eine Ausschnittsöffnung in einem Gehäuseteil des Verteilers eingesetzt wird. Dabei kann es sich beispielsweise um eine Seiten- oder Rückwand, aber auch um ein Decken- oder Bodenteil handeln. Der Leitungseinführungsflansch ist zum Führen einer oder mehrerer elektrischer Leitungen vorgesehen, wobei auch Querkräfte, welche aus einem Verbiegen der elektrischen Leitungen resultieren, von dem Flansch aufgenommen und in den Korpus des Verteilers abgeleitet werden. Auf diese Weise werden die mechanischen Kräfte an den Anschlüssen der Leitungen im Inneren des Verteilers reduziert.

Heutzutage eingesetzte Flansche bestehen entweder aus Kunststoff oder aus Metall und werden auf die Verteilergehäuse aufgeschraubt oder in den Ausschnittsöffnungen verrastet. Metallflansche haben dabei den Nachteil, dass sie nur für Verteiler der Schutzklasse I verwendbar sind. Zur Einhaltung der Schutzklasse I sind alle elektrisch leitfähigen Gehäuseteile mit dem Erdpotential zu verbinden. Für Schutzklasse II sind Metallflansche aufgrund ihrer elektrischen Leitfähigkeit jedoch ungeeignet. Kunststoffflansche haben hingegen den Nachteil, dass sie die auftretenden Kräfte aufgrund ihrer geringeren Formsteifigkeit nur bis zu einem gewissen Grad aufnehmen können, ohne dabei selbst verformt zu werden.

Es ist daher die Aufgabe der vorliegenden Erfindung, einen Flansch zum Durchführen von Leitungen bei einem Elektroinstallations-Verteiler sowie einen Elektroinstallations-Verteiler mit einem derartigen Flansch bereitzustellen, welche sich sowohl durch eine gute elektrische Isolationswirkung als auch durch eine verbesserte Stabilität auszeichnen.

Diese Aufgabe wird durch den Flansch sowie den Elektroinstallations-Verteiler gemäß den unabhängigen Ansprüchen gelöst. Vorteilhafte Ausgestaltungen sind Gegenstand der abhängigen Ansprüche.

Der erfindungsgemäße Flansch ist zum Durchführen von Leitungen bei einem Elektroinstallations-Verteiler verwendbar und weist einen Rahmen auf, welcher zum Befestigen des Flansches an einer in einem Gehäuseteil ausgebildeten Öffnung des Elektroinstallations-Verteilers ausgebildet ist. Weiterhin weist der Flansch einen Durchführungsbereich zum Durchführen von Leitungen auf, wobei der Durchführungsbereich mit einer Abdeckung verschließbar ist und wobei der Rahmen den Durchführungsbereich zumindest teilweise umschließt. Der Rahmen weist dabei einen metallischen Werkstoff auf und ist derart ausgebildet, dass er einwirkende mechanische Kräfte kompensiert, wobei er seine Form im Wesentlichen beibehält. Die Abdeckung besteht aus einem isolierenden Material und ist durch ein Spritzgussverfahren fest mit dem Rahmen verbunden.

Das Spritzgussverfahren oder kurz Spritzgießen ist ein Urformverfahren, welches hauptsächlich in der Kunststoffverarbeitung eingesetzt wird. Dazu wird mit einer Spritzgießmaschine der jeweilige Werkstoff, zumeist ein Kunststoff, in einer Spritzeinheit plastifiziert und in ein Spritzgießwerkzeug eingespritzt. Der Hohlraum, die sogenannte Kavität, des Werkzeugs bestimmt die Form und die Oberflächenstruktur des fertigen Bauteils. Durch Spritzgießen lassen sich Gegenstände mit hoher Genauigkeit in kurzer Zeit herstellen, wobei die Oberfläche des Bauteiles nahezu frei wählbar ist.

Der erfindungsgemäße Flansch hat somit den Vorteil, dass zum einen durch den metallischen Rahmen die mechanische Stabilität gewährleistet ist. Zum anderen wird durch das elektrisch isolierende Material der Abdeckung eine gute, isolierende Schutzwirkung erreicht. Damit kann der erfindungsgemäße Flansch sowohl für Verteiler der Schutzklasse I als auch für Verteiler der Schutzklasse II verwendet werden. Das Verbinden des Rahmens mit der Abdeckung mit Hilfe des Spritzgießens ermöglicht zudem die Realisierung einer wirkungsvollen Abdichtung zwischen Rahmen und Abdeckung.

Der Rahmen kann dabei sowohl eine offene, beispielsweise eine u-förmige Gestalt, als auch eine geschlossene, beispielsweise rechteckige Form aufweisen. Gerade im Bereich der Serienfertigung stellt das Spritzgussverfahren zudem eine kostengünstige Alternative zu herkömmlichen Montagearten dar, welche meist einen höheren manuellen Aufwand erfordern. Zum Durchführen der Leitungen wird die Abdeckung bei der Montage mit Öffnungen versehen, durch welche die elektrischen Leitungen anschließend hindurchgeführt werden können. Die Anzahl sowie die Größe der Öffnungen sind dabei abhängig von der jeweiligen Montagesituation und können vom betreffenden Monteur jeweils eigenständig angepasst werden.

In einer vorteilhaften Weiterbildung ist der Rahmen vollständig metallisch ausgebildet. Ein vollständig metallischer Rahmen ist auf einfache Art und Weise - beispielsweise aus Profilstahl - herstellbar.

In einer weiteren vorteilhaften Weiterbildung ist der Rahmen vollständig mit dem isolierenden Material umspritzt. Zur Realisierung der Schutzklasse II Anforderungen ist eine vollständig isolierende Schicht zwischen dem metallischen Rahmen und der Seiten- oder Rückwand des Verteilers erforderlich. Diese Anforderung kann durch ein vollständiges Umspritzen des Rahmens mit dem isolierenden Material der Abdeckung ohne größeren Aufwand erreicht werden.

In einer weiteren vorteilhaften Weiterbildung weist der Flansch eine Dichtung auf, die zum Abdichten zwischen dem Flansch und dem Gehäuseteil angeordnet ist.

In einer weiteren vorteilhaften Weiterbildung ist die Dichtung im Bereich des Rahmens auf den Flansch aufgeklebt oder aufgeschäumt. In einigen Anwendungsfällen ist eine Abdichtung zwischen dem Flansch und dem Gehäuse des Verteilers gefordert. Dies kann durch eine Dichtung erreicht werden, welche vor der Montage im Bereich des Rahmens auf den Flansch aufgeklebt oder aufgeschäumt wird. Dies kann im Rahmen der Montagearbeiten erfolgen. Die Dichtung kann dabei an die Umgebungseinflüsse angepasst werden.

In einer weiteren vorteilhaften Weiterbildung ist an der Abdeckung ein umlaufender Steg derart ausgebildet, dass er im montierten Zustand durch die Öffnung des Elektroinstallations-Verteilers in diesen hineinragt. Gerade zur Erfüllung der Schutzklasse II Anforderungen ist es erforderlich, dass alle elektrisch leitenden Oberflächen durch eine verstärkte Isolierung vor Kontakt mit spannungsführenden Teilen geschützt sind. Durch den umlaufenden Steg, welcher in den Verteiler hineinragt, wird sichergestellt, dass die durch den Flansch geführten Leitungen nicht über die Stirnseiten der Öffnung mit dem Gehäuse des Verteilers in Kontakt kommen. Eine Unterbrechung der Schutzisolierung wird dadurch verhindert.

In einer weiteren vorteilhaften Weiterbildung sind die Dichtung und/oder der Steg durch das Spritzgussverfahren, bei dem die Abdeckung fest mit dem Rahmen verbunden wird, am Rahmen angespritzt. Durch das direkte Anspritzen des Steges und/oder der Dichtung, das in einem Arbeitsschritt mit dem Anspritzen der Abdeckung an den Rahmen erfolgen kann, wird ein zusätzlicher Arbeitsschritt zum Montieren der Dichtung und/oder des Steges vermieden. Die Herstellkosten können dadurch deutlich reduziert werden.

In einer weiteren vorteilhaften Weiterbildung ist die Abdeckung zumindest teilweise aus einem elastomeren Kunststoff gefertigt.

Elastomere sind formfeste, aber elastisch verformbare Kunststoffe, welche sich bei Zug- oder Druckbelastung elastisch verformen. Bei Ausbleiben der Belastung nehmen sie wieder ihre ursprüngliche, unverformte Gestalt ein. Zu den Elastomeren gehören alle Arten von vernetztem Kautschuk. Der Vorteil einer aus einem derart elastischen, d.h. reversibel flexiblen Kunststoff bestehenden Abdeckung besteht unter anderem darin, dass die Abdeckung zur Durchführung einer elektrischen Leitung lediglich an einer geeigneten Stelle mit Hilfe eines geeigneten Werkzeugs durchstoßen werden muss. Dies kann beispielsweise mittels eines Stichels oder eines spitzen Schraubendrehers erfolgen. Besteht die elektrische Leitung aus einem formstabilen Kupferdraht, so kann die Abdeckung auch mittels der Leitung selbst durchstoßen werden. Beim Durchführen der elektrischen Leitung schmiegt sich der elastische Kunststoff an die Leitung an und dichtet dabei den Innenraum des Verteilers gegen die Umgebung ab. Dies ist vor allem interessant, wenn viele Leitungen mit kleinen Leitungsquerschnitten durch den Flansch in den Verteiler geführt werden sollen.

In einer weiteren vorteilhaften Weiterbildung ist die Abdeckung zumindest teilweise aus einem duroplastischen oder thermoplastischen Kunststoff gefertigt.

Thermoplaste sind in einem bestimmten Temperaturbereich formstabil, lassen sich aber durch Erwärmung thermo-plastisch verformen. Sie sind für eine Verarbeitung im Spritzgussverfahren bestens geeignet. Duroplaste, auch Duromere genannt, sind hingegen Kunststoffe, die nach ihrer Aushärtung nicht mehr verformt werden können. Sie sind ebenfalls im Spritzgussverfahren verarbeitbar, formstabil, vergleichsweise hart und daher für Befestigungen bestens geeignet. Eine aus einem duroplastischen oder thermoplastischen Kunststoff hergestellte Abdeckung hat den Vorteil, dass sie aufgrund ihrer höheren Formstabliltät deutlich höhere Kräfte aufnehmen kann. Dies ist insbesondere im Bereich der Einspeisung von Vorteil, da hier wenige, aber vergleichsweise dicke elektrische Leitungen durch den Flansch zu führen sind, welche auf den Flansch vergleichsweise hohe Querkräfte ausüben können. Zur Durchführung der Leitung wird die Abdeckung an einer geeigneten Stelle aufgebohrt. Dies kann wiederum individuell je nach erforderlicher Position der einzuführenden Leitung erfolgen. Eine Fixierung der Leitung kann beispielsweise mittels einer Verschraubung an der Abdeckung erfolgen.

Es ist ebenso möglich, die Abdeckung teilweise aus einem duroplastischen oder thermoplastischen Kunststoff und teilweise aus einem elastomeren Kunststoff zu fertigen. Das Spritzgießen müsste entsprechend in zwei oder mehreren Schritten erfolgen. Eine derartige Abdeckung mit einem duroplastischen bzw. thermoplastischen Bereich und einem elastomeren Bereich hätte den Vorteil, dass über den elastomeren Bereich ein oder mehrere elektrische Leitungen mit dünnem Querschnitt durch den Flansch in den Verteiler geführt werden können. Über den duroplastischen bzw. thermoplastischen Bereich können ein oder mehrere elektrische Leitungen mit vergleichsweise dickem Querschnitt am Flansch befestigt und in den Verteiler geführt werden.

Der erfindungsgemäße Elektroinstallations-Verteiler weist einen Flansch, welcher nach einem der Ansprüche 1 bis 9 ausgebildet ist, auf.

Hinsichtlich der Vorteile des erfindungsgemäßen Elektroinstallations-Verteilers wird auf die Ausführungen zu dem erfindungsgemäßen Leitungseinführungsflansch verwiesen.

Im Folgenden werden Ausführungsbeispiele des Flansches sowie des Elektroinstallations-Verteilers unter Bezug auf die beigefügten Figuren näher erläutert. In den Figuren sind:
- Figur 1: eine schematische Darstellung des erfindungsgemäßen Elektroinstallations-Verteilers in einer perspekti- vischen Ansicht,
- Figuren 2a bis 2c: ein erstes Ausführungsbeispiel des erfindungsgemä- ßen Flansches in mehreren Ansichten,
- Figur 3: ein Schnitt durch einen Flansch mit einer angeform- ten Dichtung,
- Figuren 4a und 4b: ein zweites Ausführungsbeispiel des Flansches in einer Schrägansicht sowie einer Schnittdarstellung,
- Figuren 5a und 5b: ein drittes Ausführungsbeispiel des Flansches in einer Draufsicht sowie einer Schnittdarstellung.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

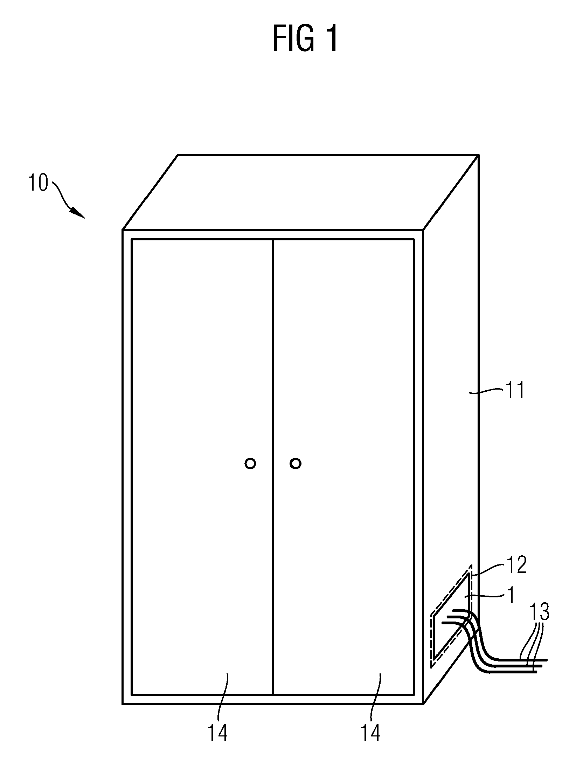

Figur 1 zeigt eine schematische Darstellung des erfindungsgemäßen Elektroinstallations-Verteilers 10 in einer perspektivischen Ansicht. Der Verteiler 10 ist dabei als Standverteiler ausgebildet; es ist jedoch ebenso möglich, den Verteiler 10 als Wandverteiler, sowohl in einer Auf-Putz- als auch in einer Unter-Putz-Bauform auszuführen. Der Verteiler 10 dient der Aufnahme von Geräten der Elektroinstallation und weist an seiner Vorderseite zwei Türen 14 auf, welche die Geräte gegen unbefugten Zugriff schützen. An einem als Seitenwand ausgebildeten Gehäuseteil 11 weist der Verteiler 10 eine Öffnung 12 auf, welche mit einem Flansch 1, der einer Einführung elektrischer Leitungen 13 in den Verteiler 10 dient, verschlossen ist. Die Öffnung 12 kann im Prinzip ebenso an der Rück-, Ober- oder Unterseite des Verteilers angeordnet sein, allerdings ist dann die Zugänglichkeit entsprechend eingeschränkt. Bei Einbaugeräten, beispielsweise für die Unter-Putz-Montage spielt jedoch die Position des Flansches 1 am Verteiler 10 eine eher untergeordnete Rolle. Mit Hilfe des Flansches 1 werden einerseits die Leitungen 13 geführt und gehalten, andererseits dient der Flansch auch zum Abdichten des Innenraums des Verteilers 10 gegen seine Umgebung. Je nach geforderter Schutzklasse sind dabei unterschiedliche Anforderungen zu beachten.

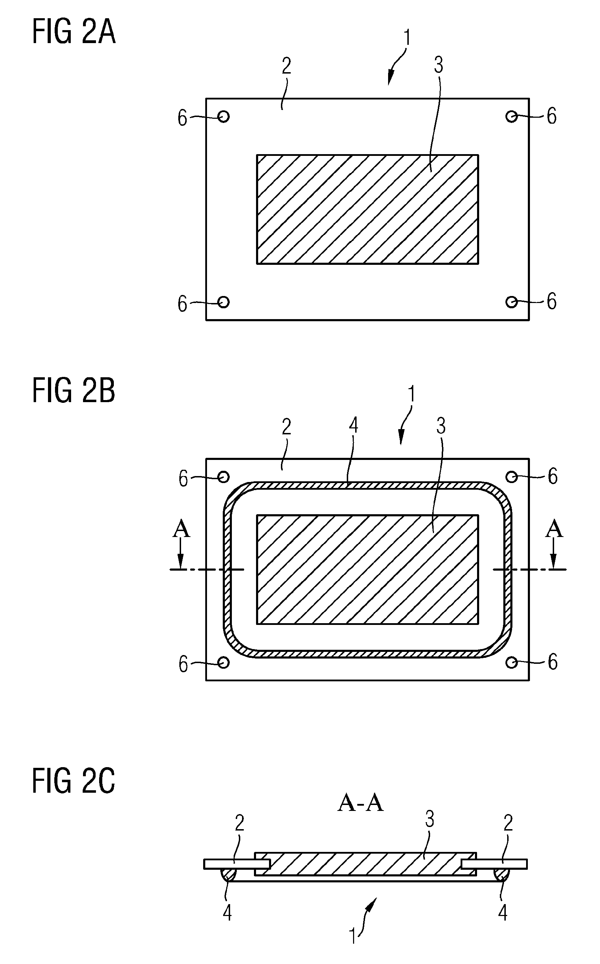

In den Figuren 2a und 2b ist ein erstes Ausführungsbeispiel des erfindungsgemäßen Flansches 1 in mehreren Ansichten schematisch dargestellt. Fig. 2a und 2b zeigen dabei eine Vorder- und eine Rückansicht des Flansches 1, während Fig. 2c einen Schnitt durch den Flansch 1 entlang der Linie A-A in Fig. 2b zeigt. Der Flansch 1 weist einen rechteckigen Rahmen 2 auf, welcher einen Durchführungsbereich umschließt. Dieser Durchführungsbereich ist mit einer Abdeckung 3 verschlossen, die an den Rahmen 2 im Spritzgussverfahren angespritzt wurde. Zum Befestigen des Flansches 1 am Verteiler 10 sind mehrere Befestigungsbohrungen 6 am Rahmen 2 vorgesehen, über die der Flansch 1 beispielsweise mittels Schraubverbindungen mit dem Verteiler 10 verbunden werden kann. An der Unterseite des Flansches 1 (siehe Fig. 2b) ist eine Dichtung 4 auf dem Rahmen 2 angeordnet. Die Dichtung 4 dient der Abdichtung der Verbindungsstelle zwischen Flansch 1 und Verteiler 10 und kann an den Rahmen 2 angeklebt oder aufgespritzt werden.

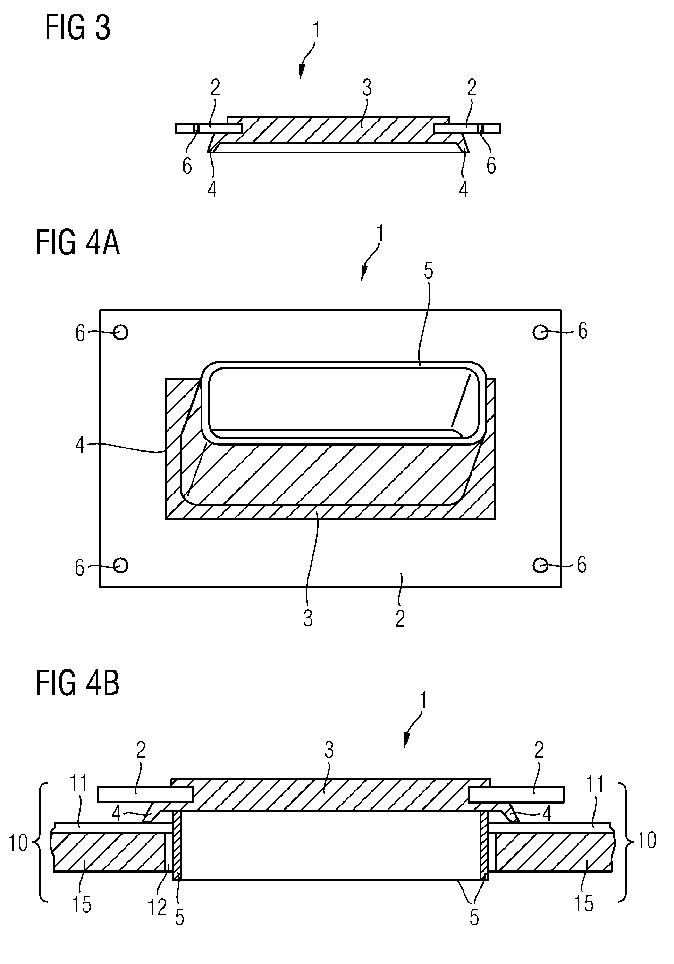

Figur 3 zeigt schematisch ein Schnitt durch einen Flansch 1, bei dem die Dichtung 4 bereits an die Abdeckung 3 angeformt ist. Die Dichtung 4 ist dabei - ebenso wie die in Fig. 2b dargestellte Dichtung 4 - umlaufend ausgebildet. Da die Abdeckung 3 im Spritzgussverfahren an den Rahmen 2 angespritzt wird, kann im selben Arbeitsschritt auch die Dichtung 4 ausgebildet werden. Über die Befestigungsbohrungen 6 wird der Flansch 1 gegen den Verteiler 10 gezogen, wobei die Dichtung 4 gegen den Verteiler 10 gedrückt wird und den Innenraum des Verteilers 10 gegen die Umgebung sicher abdichtet.

In den Figuren 4a und 4b ist ein zweites Ausführungsbeispiel des Flansches 1 schematisch dargestellt. Dabei zeigt Fig. 4a den Flansch 1 in einer Schrägansicht, wohingegen Fig. 4b eine Schnittdarstellung zeigt, bei der der Flansch 1 in der Öffnung 12 der Seitenwand 11 des Verteilers 10 angeordnet ist. Die Seitenwand 11 weist an ihrer dem Inneren des Verteilers 10 zugewandten Seite eine Schutzisolierung 15 auf, womit der Verteiler 10 die Anforderungen der Schutzklasse II erfüllt. Der Flansch 1 weist wiederum einen Rahmen 2 auf, an den die Abdeckung 3 angespritzt ist. An die Abdeckung 3 ist weiterhin ein Steg 5 angespritzt, welcher im montierten Zustand (siehe Fig. 4b) durch die Öffnung 12 in den Verteiler 10 hineinragt. Dadurch wird verhindert, dass die Schutzisolierung 15 des Verteilers 10 im Bereich der Öffnung 12 unterbrochen wird. Somit können weder die durch den Flansch geführten elektrischen Leitungen 13 noch der metallische Rahmen 2 mit der Seitenwand 11 des Verteilers 10 in Kontakt kommen. Damit sind die Anforderungen der Schutzklasse II erfüllt. Wie bereits in Fig. 3 dargestellt ist auch hier eine umlaufende Dichtung 4 an die Abdeckung 3 angeformt, welche im montierten Zustand des Flansches 1 zwischen dem Flansch 1 und der Seitenwand 11 angeordnet ist und den Innenraum des Verteilers 10 sicher gegen die Umgebung abdichtet.

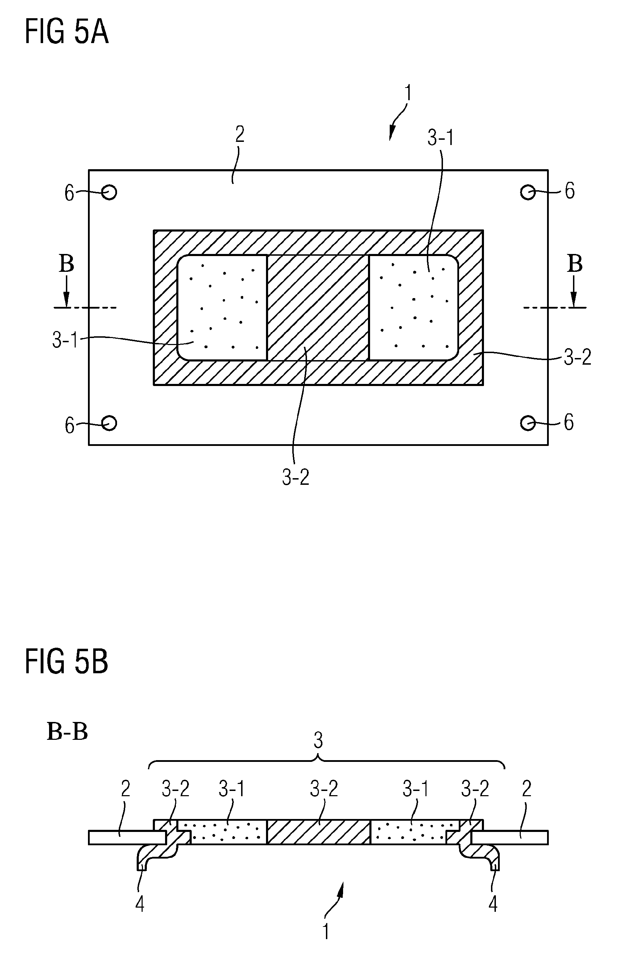

Die Figuren 5a und 5b zeigen ein drittes Ausführungsbeispiel des Flansches 1. Fig. 5a stellt eine Draufsicht oder Vorderansicht des Flansches 1 dar; Fig. 5b zeigt einen Schnitt durch den Flansch 1 entlang der in Fig. 5a dargestellten Linie B-B. Dabei ist die Abdeckung 3 teilweise aus einem elastomeren Kunststoff 3-1 und teilweise aus einem duroplastischen oder thermoplastischen Kunststoff 3-2 gefertigt. Dabei wird zunächst der harte, d.h. duroplastische oder thermoplastische Kunststoff 3-2 an den Rahmen 2 angespritzt. Anschließend werden die noch nicht ausgefüllten Teile des Durchführungsbereichs mit dem weichen, elastomeren Kunststoff 3-1 ausgespritzt. Über den harten, mittleren Kunststoff 3-2 kann anschließend die Einführung einer oder mehrerer elektrischer Leitungen 13 mit dickerem Querschnitt, beispielsweise Einspeiseleitungen, durch den Flansch 1 in den Verteiler 10 geführt werden. Die vergleichsweise hohen Querkräfte, welche von Leitungen 13 mit dickerem Querschnitt auf den Flansch 1 ausgeübt werden können, werden durch den harten Kunststoff 3-2 über den Metallrahmen 2 besser in den Korpus des Verteilers 10 abgeleitet. Über den in den Randbereichen ausgebildeten weichen, elastomeren Kunststoff 3-1 können hingegen eine Vielzahl elektrischer Leitungen 13 mit dünnem Querschnitt durch den Flansch 1 in den Verteiler 10 geführt werden. Dabei schmiegt sich der elastische Kunststoff 3-1 an die Leitungen 13 an und dichtet somit den Innenraum des Verteilers 10 sicher gegen die Umgebung ab.

### Bezugszeichenliste:

- 1: Flansch
- 2: Rahmen
- 3: Abdeckung
- 4: Dichtung
- 5: Steg
- 6: Befestigungsbohrung

- 10: Elektroinstallations-Verteiler
- 11: Gehäuseteil / Seitenwand
- 12: Öffnung
- 13: Leitung
- 14: Türe
- 15: Schutzisolierung

## Patentansprüche

1. Flansch (1), der zum Durchführen von Leitungen bei einem Elektroinstallations-Verteiler (10) verwendbar ist,
- bei dem der Flansch (1) einen Rahmen (2) aufweist, wobei der Rahmen (2) zum Befestigen des Flansches (1) an einer in einem Gehäuseteil (11) ausgebildeten Öffnung (12) des Elektroinstallations-Verteilers (10) ausgebildet ist,
- bei dem der Flansch (1) einen Durchführungsbereich zum Durchführen von Leitungen (13) aufweist, wobei der Durchführungsbereich mit einer Abdeckung (3) verschließbar ist,
- bei dem der Rahmen (2) den Durchführungsbereich zumindest teilweise umschließt,
**dadurch gekennzeichnet,**
- **dass** der Rahmen (2) einen metallischen Werkstoff aufweist und derart ausgebildet ist, dass er einwirkende mechanische Kräfte kompensiert, wobei er seine Form im Wesentlichen beibehält,
- **dass** die aus einem isolierenden Material bestehende Abdeckung (3) durch ein Spritzgussverfahren fest mit dem Rahmen (2) verbunden ist.

2. Flansch (1) nach Anspruch 1,
**dadurch gekennzeichnet,**
**dass** der Rahmen (2) vollständig metallisch ausgebildet ist.

3. Flansch (1) nach einem der vorhergehenden Ansprüche,
**dadurch gekennzeichnet,**
**dass** der Rahmen (2) vollständig mit dem isolierenden Material umspritzt ist.

4. Flansch (1) nach einem der vorhergehenden Ansprüche,
**dadurch gekennzeichnet,**
**dass** der Flansch (1) eine Dichtung (4) aufweist, die zum Abdichten zwischen dem Flansch (1) und dem Gehäuseteil (11) angeordnet ist.

5. Flansch (1) nach Anspruch 4,
**dadurch gekennzeichnet,**
**dass** die Dichtung im Bereich des Rahmens (2) auf den Flansch (1) aufgeklebt oder aufgeschäumt ist.

6. Flansch (1) nach einem der Ansprüche 1 bis 5,
**dadurch gekennzeichnet,**
**dass** an der Abdeckung (3) ein umlaufender Steg (5) derart ausgebildet ist, dass er im montierten Zustand durch die Öffnung (12) des Elektroinstallations-Verteilers (10) in diesen hineinragt.

7. Flansch (1) nach einem der vorhergehenden Ansprüche,
**dadurch gekennzeichnet,**
**dass** die Dichtung (4) und/oder der Steg (5) durch das Spritzgussverfahren, bei dem die Abdeckung (3) fest mit dem Rahmen (2) verbunden wird, am Rahmen (2) angespritzt sind.

8. Flansch (1) nach einem der Ansprüche 1 bis 7
**dadurch gekennzeichnet,**
**dass** die Abdeckung (3) zumindest teilweise aus einem elastomeren Kunststoff gefertigt ist.

9. Flansch (1) nach einem der Ansprüche 1 bis 8,
**dadurch gekennzeichnet,**
**dass** die Abdeckung (3) zumindest teilweise aus einem duroplastischen oder thermoplastischen Kunststoff gefertigt ist.

10. Elektroinstallations-Verteiler (10),
**dadurch gekennzeichnet,**
**dass** er einen Flansch (1), der nach einem der Ansprüche 1 bis 9 ausgebildet ist, aufweist.
